# EUROPÄISCHE PATENTSCHRIFT

(11) **EP 1 571 638 B1**
(45) Veröffentlichungstag und Bekanntmachung des Hinweises auf die Patenterteilung: **11.04.2007**
(21) Anmeldenummer: 05100169.1
(22) Anmeldetag: 13.01.2005
(51) Int. Cl.: G08G 1/16, B60Q 1/52

(54) **Verfahren zur Abstandswarnung für ein Fahrzeug und Abstandswarneinheit**
Method for distance warning for a vehicle and distance warning unit
Méthode pour alarme de distance pour un véhicule et unité d'alarme de distance

(30) Priorität: 05.03.2004 DE 102004010752
(43) Veröffentlichungstag der Anmeldung: 07.09.2005
(73) Patentinhaber: ROBERT BOSCH GMBH, 70442 Stuttgart (DE)
(72) Erfinder: Ewerhart, Frank, 74189 Weinsberg (DE); Guenther, Clemens, 76275 Ettlingen (DE); Wittig, Thomas, 71139 Ehningen (DE); Engeln, Arnd, 72072 Tuebingen (DE)

(56) Entgegenhaltungen:
- US-A- 5 251 680
- US-A- 5 751 211
- US-A- 6 150 932

## Beschreibung

### Stand der Technik

Die Erfindung geht aus von einem Verfahren zur Abstandswarnung nach der Gattung des Anspruchs 1. Es sind schon Abstandswarnanlagen insbesondere zur Unterstützung eines Einparkvorgangs bekannt, bei denen der Abstand zu Hindernissen in der Umgebung des Fahrzeugs gemessen wird und der Fahrer vor solchen Hindernissen durch entsprechende Anzeigen und/oder akustische Ausgaben gewarnt wird. Bei diesen Warnungen ist zu berücksichtigen, dass ein Fahrer auf die Warnung gegebenenfalls noch reagieren muss, so dass eine Warnung verhältnismäßig frühzeitig ausgegeben werden muss, um eine Kollision sicher verhindern zu können. Auch müssen Fehlertoleranzen der Sensoren mit berücksichtigt werden. Tendenziell werden daher mehr Warnungen ausgegeben, als vom Fahrer eigentlich benötigt werden. Insbesondere bei Einparkvorgängen parallel zur Straßenführung oder bei einer Durchfahrt an Engstellen kann es dazu kommen, dass die Fahrzeugecken sehr nahe an Objekte heran kommen und ein entsprechender Warnabstand, bei dem eine Warnung ausgelöst wird, unterschritten wird. Da sich die Intensität von Warnungen im allgemeinen mit abnehmendem Abstand steigert, wird bei diesen sehr geringen Abständen eine besonders gut wahrnehmbare Warnung ausgegeben, z.B. ein akustischer Dauerton. Obwohl eine Warnung ausgegeben wird, ist jedoch aufgrund des Fahrwegs des Fahrzeugs mit keiner Kollision zu rechnen. Es wird daher eine unnötige Warnung an den Fahrer ausgegeben.

Aus der US 6, 150, 932 ist ein Verfahren zur Fahrerwarnung bekannt, bei dem unter der Berücksichtigung der Geschwindigkeit eines Fahrzeugs und des Fahrwegs eines Fahrzeugs eine Warnung vor einem Hindernis vor dem Fahrzeug ausgegeben wird.

### Vorteile der Erfindung

Die vorliegende Erfindung mit den Merkmalen der nebengeordneten Ansprüche hat demgegenüber den Vorteil, dass ein Fahrweg des Fahrzeugs für die Bestimmung, ob eine Warnung ausgegeben werden soll, mit einbezogen wird. Der Fahrweg des Fahrzeugs wird ausgehend von der aktuellen Position voraus projiziert, wobei bestimmt wird, ob das Fahrzeug an dem Hindernis kollisionsfrei vorbei fahren wird oder nicht. Ein Fahrer kann daher in sehr geringem Abstand an einem Hindernis vorbei fahren, mit dem er nicht kollidieren wird, ohne dass ihm eine störende Warnung ausgegeben wird. Denn selbst für den Fall, dass das Fahrzeug beschleunigen würde, ist mit einer Kollision nicht zu rechnen, da der Fahrweg des Fahrzeugs an dem Hindernis vorbei führt. Befindet sich das Hindernis im Fahrweg oder sehr nah an dem Fahrweg, so wird nach wie vor bereits entsprechend frühzeitig eine Warnung vor diesem Hindernis ausgegeben.

Durch die in den Unteransprüchen aufgeführten Maßnahmen sind vorteilhafte Weiterbildungen und Verbesserungen des im Hauptanspruch angegebenen Verfahrens zur Abstandsmessung möglich. Besonders vorteilhaft ist, den Lenkeinschlag des Fahrzeugs zu bestimmen und aus dem Lenkeinschlag einen erwarteten Fahrweg für das Fahrzeug zu prognostizieren. Insbesondere wird dabei ein Fahrweg berücksichtigt, der bei ungeändertem Lenkeinschlag für eine vor dem Fahrzeug liegende Strecke von z.B. zwei Metern zu erwarten wäre. Wird der Lenkeinschlag verändert, wird der Fahrweg entsprechend neu berechnet und damit auch ein mögliches Kollisionsrisiko mit Hindernissen der Fahrzeugumgebung neu bestimmt.

Ferner ist es vorteilhaft, die Position eines Hindernisses mit mehreren Sensoren zugleich zu bestimmen, um eine Ortung der Position des Hindernisses im Raum zu ermöglichen, so dass nicht nur ein reiner Abstand, sondern auch die räumliche Lage des Hindernisses zum Fahrzeug bekannt wird. Hierdurch kann der projizierte Fahrweg mit der Position von Hindernissen verglichen werden.

Es ist ferner vorteilhaft, den Fahrer durch eine optische Warnung auf das nahe Vorbeifahren an einem Hindernis hinzuweisen. Eine akustische Warnung sollte erfindungsgemäß jedoch erst dann ausgegeben werden, wenn tatsächlich ein Eingreifen durch den Fahrer bzw. ein besonderes Überwachen des Fahrvorgangs erforderlich wird.

Eine unnötige akustische Warnung kann den Fahrer stören und ihn vom Fahrgeschehen ablenken.

Es ist ferner vorteilhaft, für Hindernisse vor oder hinter dem Fahrzeug, bevorzugt auch für Hindernisse seitlich des Fahrzeugs, durch jeweils unterschiedliche Warnausgaben, insbesondere aus der Richtung, in der das Hindernis liegt, zu warnen. Der Fahrer kann daher unmittelbar erkennen, in welche Richtung er seine Aufmerksamkeit lenken muss.

### Zeichnung

Ausführungsbeispiele der Erfindung sind in der Zeichnung dargestellt und in der nachfolgenden Beschreibung näher erläutert. Es zeigen
Figur 1 eine schematische Aufsicht auf ein Fahrzeug mit einer erfindungsgemäßen Abstandswarneinheit zur Durchführung des erfindungsgemäßen Verfahrens zur Abstandswarnung,
Figur 2 eine Fahrzeuganordnung mit einem Fahrzeug mit einer erfindungsgemäßen Abstandswarneinheit bei einem Einparkvorgang.

### Beschreibung des Ausführungsbeispiels

Die vorliegende Erfindung kann für beliebige Fahrzeuge und Fahrmanöver eingesetzt werden. Besonders vorteilhaft ist ihre Verwendung jedoch bei Einparkvorgängen und Ausparkvorgängen, bei denen die Geschwindigkeit des Fahrzeugs gering ist und der zur Verfügung stehende Platz für den Parkvorgang im allgemeinen beschränkt ist. Indem eine Warnung möglichst nur in den Fällen ausgegeben wird, in denen tatsächlich ein Risiko einer Kollision besteht, wird die Benutzerakzeptanz einer Einparkhilfe erhöht. Ferner kann der zur Verfiigung stehende Platz optimal ausgenutzt werden, da ein Fahrer nicht durch eine Warnung unnötig gestoppt und zu einem aufwändigen Fahrmanöver aufgefordert wird.

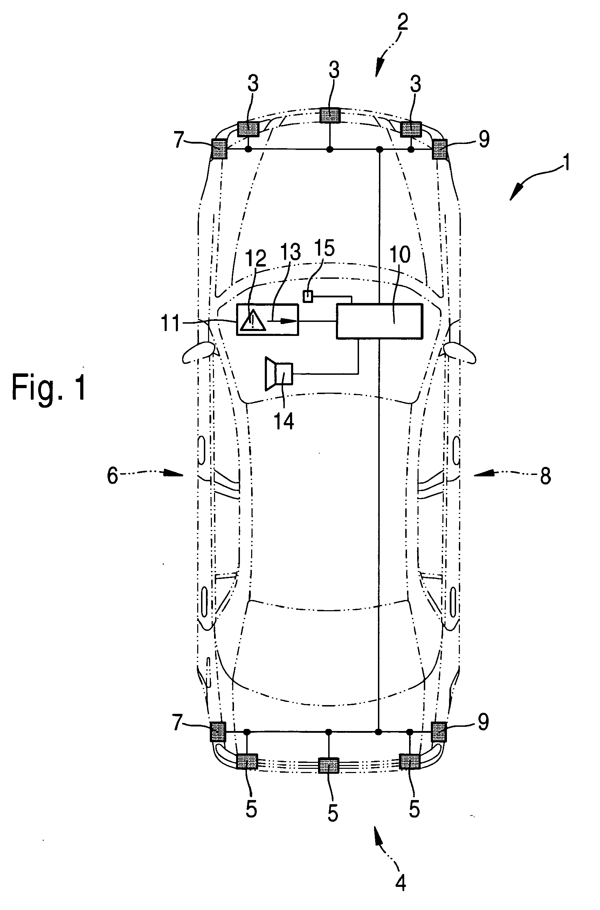

In der Figur 1 ist eine erfindungsgemäße Abstandswarneinheit in einem Kraftfahrzeug 1 schematisch dargestellt. An einer Fahrzeugvorderseite 2 sind Abstandssensoren 3 angeordnet, die den Abstand des Fahrzeugs zu vor dem Fahrzeug liegenden Hindernissen messen. An einer Fahrzeugrückseite 4 sind ebenfalls Abstandssensoren 5 angeordnet, die den Abstand der Fahrzeugrückseite 4 zu hinter dem Fahrzeug liegenden Hindernissen messen. Auf einer linken Fahrzeugseite 6 sind ferner ebenfalls Abstandssensoren vorzugsweise in der Nähe zu der Fahrzeugvorderseite 2 und zu der Fahrzeugrückseite 4 angeordnet, die den Abstand der linken Fahrzeugseite 6 zu Hindernissen messen. An einer rechten Fahrzeugseite 8 sind entsprechende Abstandssensoren 9 angeordnet, die einen Abstand zu der rechten Fahrzeugseite 8 messen. Die Abstandssensoren 3, 5, 7, 9 sind bevorzugt als Ultraschall-Abstandssensoren ausgebildet, die über eine Laufzeit eines Ultraschallsignals den Abstand zu Hindernissen bestimmen. Dies kann sowohl durch eine direkte Reflexion eines von einem der Sensoren ausgesendeten Signals oder über eine Kreuzechomessung erfolgen, bei der ein von einem Sensor ausgestrahltes Signal von einem benachbarten Sensor nach einer Reflexion an einem Hindernis wieder empfangen wird. Die empfangenen Signale oder gegebenenfalls bereits teilweise ausgewertete Abstandsdaten werden zu einer Recheneinheit 10 im Fahrzeug weitergeleitet, die die von den Abstandssensoren 3, 5, 7, 9 empfangenen Daten auswertet. In einer bevorzugten Ausführungsform werden die Messdaten, die sich auf ein Hindernis beziehen und von verschiedenen Sensoren stammen, derart kombiniert, dass nicht nur der Abstand eines Hindernisses zu einem Fahrzeug, sondern auch seine Lage gegenüber dem Fahrzeug bekannt wird. Diese Lagebestimmung erfolgt z.B. über ein bekanntes Triangulationsverfahren.

Bevorzugt sind Sensoren sowohl an der Vorderseite, als auch an der Fahrzeugrückseite ausgebildet. Um ein preisgünstigeres System zu erhalten, kann sich jedoch die Anordnung der Sensoren auch auf die Fahrzeugvorderseite bzw. insbesondere auf die Fahrzeugrückseite beschränken.

Die Recheneinheit 10 ist mit einer Anzeigeeinheit 11 zur Anzeige eines Warnsymbols 12 und/oder zur Ausgabe eines Richtungshinweises 13 verbunden, so dass eine Warnung optisch an einen Benutzer ausgegeben werden kann. Ferner ist ein Lautsprecher 14 mit der Recheneinheit 10 verbunden, der es ermöglicht, akustische Warnungen an einen Fahrer auszugeben. In einer bevorzugten Ausführungsform ist der Lautsprecher 14 Teil einer Radioeinrichtung in einem Fahrzeug. In einer in der Figur 1 nicht dargestellten Ausführungsform kann zudem der gemessene Abstand zu einem Hindernis als Zahlenwert oder in Form einer Balken-Abstandsanzeige an einen Fahrer ausgegeben werden. Es kann in der Anzeigeeinheit 11 auch eine vorzugsweise maßstäbliche Darstellung des Fahrzeugs und der erkannten Hindernisse, z. B. aus der Vogelperspektive, wieder gegeben werden. In einer in der Figur 1 nicht dargestellten Ausführungsform können auch mehrere Lautsprecher angeschlossen sein, damit ein Warnton in Richtung des relevanten Hindernisses ausgegeben werden kann.

Für die Ausgabe von akustischen und/oder optischen Warnungen an den Fahrzeugführer sind jeweils mehrere Abstandsgrenzen vorgegeben, bei denen die Warnungen einsetzen. Bevorzugt erfolgt zunächst lediglich eine optische Warnung, während mit abnehmendem Abstand ab einer vorgegebenen Grenze auch eine akustische Warnung eintritt. Es kann auch lediglich eine akustische Warnung ausgegeben werden.

Eine akustische Warnung erfolgt in einer bevorzugten Ausführungsform zunächst als eine unterbrochene Tonfolge, bei der sich die Abstandsintervalle bei einzelnen Tönen mit abnehmendem Abstand verringern, bis zu einem vorgegebenen Abstand der unterbrochene Signalton in einen gut wahrnehmbaren Dauerton übergeht.

In einer bevorzugten Ausführungsform ist die Recheneinheit 10 zudem mit einem Lenkwinkelsensor 15 verbunden, der einen aktuellen Lenkeinschlag und damit eine Fahrrichtung des Fahrzeugs ermittelt und an die Recheneinheit 10 meldet. Die Recheneinheit 10 wertet den ermittelten Lenkeinschlag dahingehend aus, dass sie einen erwarteten Fahrweg des Fahrzeugs berechnet. Der Fahrweg wird z.B. für eine Strecke von 2m ausgehend von der aktuellen Fahrzeugposition mit dem aktuellen Lenkeinschlag vorausberechnet. Die Recheneinheit 10 prüft daraufhin, ob sich Hindernisse auf dem Fahrweg des Fahrzeugs befinden. Ferner wird geprüft, ob das Fahrzeug unterhalb eines zweiten Abstandswertes an diesen Hindernissen vorbeifahren wird. Dieser zweite Abstandswert beträgt in einer bevorzugten Ausführungsform 20 cm. Werden weder auf dem Fahrweg, noch in einem Abstand von 20 cm zu dem Fahrzeugäußeren bei einer prognostizierten Vorbeifahrt Hindernisse erfasst, so ist mit einer Kollision nicht zu rechnen. Selbst für den Fall, dass sich seitlich von dem Fahrweg Hindernisse unterhalb einer ersten Abstandsgrenze von z.B. 70 cm an das Fahrzeug annähern, so wird vor diesen Hindernissen nicht oder gegebenenfalls lediglich optisch gewarnt, da mit einer Kollision mit diesen Hindernissen nicht zu rechnen ist. Der Fahrweg wird dabei im wesentlichen durch die Fahrzeugecken bestimmt, die gegebenenfalls durch einen Einschlag der Lenkung über die von den Rädern zurückgelegte Fahrstrecke hinausragen können. Befindet sich ein Hindernis auf dem Fahrweg, so wird vor diesem Hindernis bereits mit Erreichen eines ersten Abstandswertes, z.B. 70 cm, erstmalig akustisch gewarnt, so dass ein Fahrer gegebenenfalls noch einen Bremsvorgang einleiten kann.

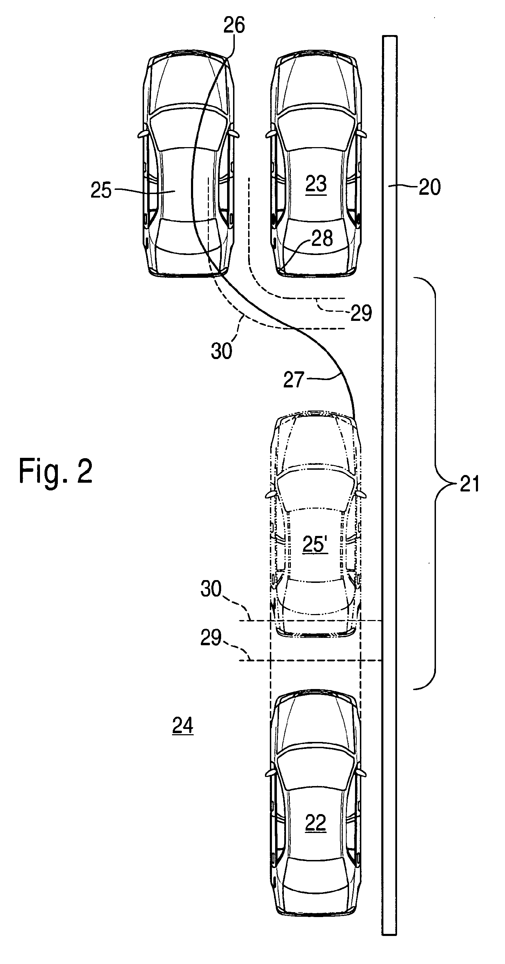

Ein entsprechendes erfindungsgemäßes Warnverfahren ist im Folgenden am Beispiel eines Einparkvorgangs parallel zur Straßenführung gemäß der Figur 2 erläutert. An einem Straßenrand 20 ist eine Längsparklücke 21 zwischen einem hinteren Fahrzeug 22 und einem vorderen Fahrzeug 23 frei. Ein auf der Straße 24 fahrendes Fahrzeug 25 möchte in diese Parklücke einparken. Das Fahrzeug 25 wird dazu von dem Fahrer parallel neben dem vorderen Fahrzeug 23 positioniert, so dass der Fahrer das Fahrzeug rückwärts in die Parklücke 21 einparken kann. Das Fahrzeug 25 verfügt über eine in der Figur 2 nicht gezeigte erfindungsgemäße Abstandswarneinheit, wie sie anhand der Figur 1 erläutert wurde. Der Einparkvorgang wird anhand einer durchgezogenen Linie dargestellt, die eine Bahnkurve 27 der vorderen rechten Fahrzeugecke 26 zeigt. Die Linie verläuft von der Startposition des Fahrzeugs 25 bis zu einer Parkposition 25'. Bei dem Einparkvorgang nähert sich die vordere rechte Fahrzeugecke 26 des Fahrzeugs 25 an die hintere linke Fahrzeugecke 28 des vorderen Fahrzeugs 23 an. Bezüglich der Fahrzeugecke 28 und der die Fahrzeugecke 28 umgebenden Karosserie des vorderen Fahrzeugs sind eine erste Abstandslinie 30 und eine zweite Abstandslinie 29 in der Figur eingetragen. Die zweite Abstandslinie 29 bezeichnet einen Abstand von 20 cm, während die erste Abstandslinie 30 einen Abstand von 70 cm bezeichnet. Diese Abstandswerte können durch eine entsprechende Benutzereingabe in einer bevorzugten Ausführungsform verändert werden.

Wird der durch die zweite Abstandslinie 29 skizzierte zweite Abstandswert unterschritten, so erfolgt bevorzugt eine akustische Warnung, unabhängig davon, ob sich der Fahrweg des Fahrzeugs mit einem Hindernis überschneidet bzw. ob das Hindernis sehr nah an dem Fahrweg liegt. Im vorliegenden Fall ist die stärkste Annäherung an das vordere Fahrzeug durch die vordere rechte Ecke des Fahrzeugs 25 bei dem Einparkvorgang gegeben. Die vordere Ecke beschreibt somit einen rechten Rand des Fahrwegs des Fahrzeugs. Über diese Grenze bewegt sich das Fahrzeug in Richtung des vorderen Fahrzeugs 23 nicht hinaus. Ändert sich der Lenkwinkel des Fahrzeugs, wird der Fahrweg in Abhängigkeit von der Änderung neu projiziert und entsprechend berechnet. Der Fahrweg des Fahrzeugs überschneidet sich im hier gezeigten Beispiel mit dem vorderen Fahrzeug bei keiner Winkelstellung der Lenkung auf der Einparkstrecke. Jedoch wird bei dem Einparkvorgang der erste Abstand unterschritten. Da jedoch der zweite Abstand nicht unterschritten wird und das vordere Fahrzeug nicht auf dem Fahrweg liegt wird, erfolgt hier je nach Ausführung entweder keine Warnung oder gegebenenfalls lediglich eine optische, jedoch keine akustische Warnung an den Fahrer des Fahrzeugs 25. Nähert sich das Fahrzeug bei dem Einparken dem hinteren Fahrzeug 22 an, so erfassen die rückwärtig an dem Fahrzeug angeordneten Abstandssensoren 5 jedoch das hintere Fahrzeug auf dem Fahrweg des Fahrzeugs 25. In diesem Fall wird eine Warnung bereits bei einem Erreichen der ersten Abstandslinie 30 zu dem hinteren Fahrzeug und nicht erst bei Erreichen der zweiten Abstandslinie 29 ausgegeben.

Im hier gezeigten Ausführungsbeispiel wird der Abstand zu Fahrzeugen bestimmt. Anstelle der Fahrzeuge können jedoch auch andere Hindernisse, z.B. Blumenkübel, Verkehrszeichen oder Fahrradständer, berücksichtigt werden. Neben dem gezeigten Einparken kann das erfindungsgemäße Verfahren auch zum Ausparken aus der Parklücke verwendet werden, ebenso zur Warnung bei einer Durchfahrt durch Engstellen, wie z.B. an Tunnels oder Brücken. Anstelle einer Projektion des Fahrweges für einen jeweils eingestellten Lenkwinkel kann auch eine Projektion für einen Fahrweg erfolgen, der von einer Einparkhilfe berechnet wird, um in eine Parklücke einzuparken. Dieser Fahrweg kann z.B. eine in der Figur 2 skizzierte S-Form aufweisen. Bevorzugt wird nun überwacht, ob der Fahrer dem vorgegebenen Fahrweg in die Parklücke folgt, wobei bei Abweichungen von dem vorberechneten Fahrweg oder bei einer Ortsänderung der Hindernisse eine Überprüfung erfolgt, ob der Fahrweg weiterhin frei von Hindernissen ist.

Wäre die Bahnkurve 27 der vorderen rechten Fahrzeugecke 26 näher, also innerhalb des von der zweiten Abstandslinie 29 begrenzten Bereichs, an der linken hinteren Fahrzeugecke 28 des vorderen Fahrzeugs 23, vorbeigelaufen, so wäre eine entsprechende akustische Warnung bereits bei Erreichen des äußeren, ersten Abstandswertes ausgegeben worden, um dem Fahrer rechtzeitig Gelegenheit zu geben, entsprechend gegenzulenken, da bei einem Unterschreiten des zweiten Abstandswertes aufgrund von Messtoleranzen bzw. leichten Lenkbewegungen des Fahrers eine Kollision nicht mit letzter Sicherheit ausgeschlossen werden kann.

In der Anzeige werden die optischen Warnungen, z.B. durch entsprechende Pfeildarstellungen, bevorzugt in der Weise ausgegeben, dass ein Richtungshinweis gegeben wird, in welcher Richtung ein Hindernis dem Fahrzeug zu nahe kommt. Gegebenenfalls können hierzu auch mehrere Anzeigen im Fahrzeug verwendet werden, die in einer entsprechenden Richtung im Fahrzeug angeordnet sind.

## Patentansprüche

1. Verfahren zur Abstandswarnung für ein Fahrzeug, wobei der Abstand des Fahrzeugs zu Hindernissen (23, 25') in der Umgebung des Fahrzeugs (25) erfasst wird und bei einem Unterschreiten eines zweiten Abstands (29) des Fahrzeugs (25) zu einem der Hindernisse (23), der kleiner als ein erster Abstand (30) ist, eine Warnung ausgegeben wird, wobei ein Fahrweg (26) des Fahrzeugs derart bestimmt wird, dass eine optische (11, 13) oder akustische Warnung vor einem Hindernis (23), das in einem eingeschlagenen Fahrweg (26) des Fahrzeugs (25) liegt, bereits bei einem Unterschreiten des ersten Abstands (30) ausgegeben wird.

2. Verfahren nach Anspruch 1, **dadurch gekennzeichnet, dass** zur Bestimmung des Fahrwegs (26) ein Lenkeinschlag des Fahrzeugs erfasst wird.

3. Verfahren nach einem der vorherigen Ansprüche, **dadurch gekennzeichnet, dass** eine Position eines Hindernisses (23) über eine Abstandsmessung mit mehreren Sensoren (3, 5, 7, 9) bestimmt wird.

4. Abstandswarneinheit mit wenigstens einem Sensor (7, 9) zur Abstandsmessung an jeder Fahrzeuglängsseite (6, 8) und mit wenigstens zwei Sensoren (3, 5) zur Abstandsmessung an wenigstens einer Fahrzeugschmalseite (2, 4), mit einer Ausgabeeinheit (11, 14) zur Ausgabe einer Warnung bei einem Unterschreiten eines zweiten Abstands zu einem Hindernis, wobei dieser zweite Abstand kleiner als ein erster Abstand ist,
**gekennzeichnet durch**
eine Recheneinheit (10) zur Berechnung eines Fahrweges (26) des Fahrzeugs (25) und zum Vergleich des Fahrweges (26) mit der Position von Hindernissen(23,25) in der Fahrzeugumgebung derart, dass eine optische und akustische Warnung vor einem Hindernis (23), daß das Fahrzeug auf seinem eingeschlagenen Fahrweg berühren wird, bereits bei Unterschreiten des ersten Abstandswertes (29) ausgegeben wird.

5. Abstandswarneinheit nach Anspruch 4, **gekennzeichnet durch** einen Lenkwinkelsensor (15) zur Bestimmung einer Fahrtrichtung des Fahrzeugs.

## Claims

1. Method for issuing distance warnings for a vehicle, the distance of the vehicle from obstacles (23, 25') in the surroundings of the vehicle (25) being sensed and when the distance drops below a second distance (29) of the vehicle (25) from one of the obstacles (23), said second distance (29) being smaller than a first distance (30), a warning is issued, a travel path (26) of the vehicle being determined in such a way that an optical (11, 13) or acoustic warning of an obstacle (23) which lies in a travel path (26) which is being followed by the vehicle (25) is already issued when the distance drops below the first distance (30).

2. Method according to Claim 1, **characterized in that** a steering lock of the vehicle is sensed in order to determine the travel path (26).

3. Method according to one of the preceding claims, **characterized in that** a position of an obstacle (23) is determined by means of a distance measurement by a plurality of sensors (3, 5, 7, 9).

4. Distance warning unit having at least one sensor (7, 9) for measuring distances on each longitudinal side (6, 8) of a vehicle, and having at least two sensors (3, 5) for measuring distances on at least one narrow side (2, 4) of a vehicle, having an output unit (11, 14) for outputting a warning when the distance drops below a second distance from an obstacle, this second distance being smaller than a first distance, **characterized by** a computing unit (10) for calculating a travel path (26) of the vehicle (25) and for comparing the travel path (26) with the position of obstacles (23, 25) in the surroundings of the vehicle in such a way that an optical and acoustic warning of an obstacle (23) indicating that the vehicle will contact it on the travel path which it is following is already issued when the distance drops below the first distance value (29).

5. The distance warning unit according to Claim 4, **characterized by** a steering angle sensor (15) for determining a direction of travel of the vehicle.

## Revendications

1. Procédé d'avertissement de distance pour un véhicule, selon lequel on détecte la distance du véhicule par rapport à des obstacles (23, 25') dans l'environnement du véhicule (25), et un avertissement est émis si le véhicule (25) ne respecte pas une deuxième distance (29) par rapport à l'un des obstacles (23) inférieure à une première distance (30), une voie (26) du véhicule étant déterminée de telle sorte qu'un avertissement optique (11, 13) ou acoustique soit déjà émis devant un obstacle (23) situé sur une voie (26) empruntée par le véhicule (25) lorsque celui-ci ne respecte pas la première distance (30).

2. Procédé selon la revendication 1,
**caractérisé en ce que**
pour déterminer la voie (26) on détecte un braquage du véhicule.

3. Procédé selon l'une quelconque des revendications précédentes,
**caractérisé en ce qu'**
on détermine une position d'un obstacle (23) à l'aide d'une mesure de distance avec plusieurs capteurs (3, 5, 7, 9).

4. Unité d'avertissement de distance comprenant au moins un capteur (7, 9) pour mesurer la distance sur chaque côté longitudinal de véhicule (6, 8), et au moins deux capteurs (3, 5) pour mesurer la distance sur au moins un petit côté de véhicule (2, 4), et une unité d'émission (11, 14) pour émettre un avertissement lorsqu'une deuxième distance par rapport à un obstacle n'est pas respectée, cette deuxième distance étant inférieure à une première distance,
**caractérisée par**
une unité de calcul (10) pour calculer une voie (26) du véhicule (25) et pour comparer la voie (26) avec la position d'obstacles (23, 25') dans l'environnement du véhicule, de telle sorte qu'un avertissement optique et acoustique soit déjà émis devant un obstacle (23) que le véhicule va heurter sur sa voie empruntée dès qu'il ne respecte pas la première valeur de distance (29).

5. Unité d'amortissement de distance selon la revendication 4,
**caractérisé par**
un capteur d'angle directionnel (15) pour déterminer la direction du véhicule.
